# EUROPEAN PATENT APPLICATION

(11) **EP 4 706 584 A1**
(43) Date of publication of application: **11.03.2026**
(21) Application number: 25198671.7
(22) Date of filing: 28.08.2025
(51) Int. Cl.: A61C 1/12

(54) **DENTAL HANDPIECE**

(30) Priority: 29.08.2024 US 202418818836
(71) Applicant: DENTSPLY SIRONA Inc., York, PA 17401 (US)
(72) Inventor: ERTUGRUL, Metin, 64625 Bensheim (DE); LAUERER, Julian, 64625 Bensheim (DE); OEZEL, Mahmut, 64625 Bensheim (DE); MANDERSCHEID, Mortiz, 64625 Bensheim (DE); HAHL, Philipp, 64625 Bensheim (DE)
(74) Representative: Taor, Simon Edward William

(57) **Abstract**

A dental handpiece including an outer casing, a handpiece head, a tool receiver disposed in the handpiece head, the tool receiver is electrically conductive, a drive chain that includes a drive unit and a drive shaft drivable by the drive unit, the drive shaft being coupled to the tool receiver, a slip ring disposed around a section of the tool receiver and in mechanical and electrical connection with the tool receiver, and a prestressed bifurcated contact in mechanical and electrical connection with the slip ring. The prestressed bifurcated contact impinges on the slip ring which impinges on the tool receiver to deliver electrical signals from a connection interface a tool inserted in the tool receiver during use of the dental handpiece. The signal path includes the prestressed bifurcated contact. The drive chain, and the signal path are electrically isolated from the outer casing via ball bearings.

## Description

### BACKGROUND

### Technical Field

The present disclosure pertains to a dental handpiece, and more specifically to providing a reliable electrical signal transmission in dental handpieces for endodontic treatments.

### Description of the Related Art

Endodontic handpiece systems designed for root canal treatment may be used by dental professionals to perform dental procedures such as measuring the length of root canals. The handpiece systems may feature a low-speed rotary mechanism that allows for precise drilling and cleaning of the root canal system. The handpiece systems often include design elements to enhance comfort and reduce fatigue during prolonged use. Additionally, they may be equipped with advanced features such as adjustable speed settings, enhanced illumination to improve visibility and procedural outcomes.

### BRIEF SUMMARY

According to an embodiment, a dental handpiece includes an outer casing, a handpiece head, a tool receiver disposed in the handpiece head, the tool receiver being electrically conductive, a drive chain includes a drive unit and a drive shaft drivable by the drive unit, the drive shaft being coupled to the tool receiver, a slip ring disposed around a section of the tool receiver and in mechanical and electrical connection with the tool receiver, a prestressed bifurcated contact in mechanical and electrical connection with the slip ring, where a the prestressed bifurcated contact impinges on the slip ring which impinges on the tool receiver to deliver electrical signals from a connection interface via a signal path to a tool inserted in the tool receiver during use of the dental handpiece, the signal path including the prestressed bifurcated contact, and where the drive chain, the tool receiver, and the signal path are electrically isolated from the outer casing via ball bearings.

In one embodiment, the balls of the ball bearings are made of electrically non-conductive material such as ceramic or plastic.

In one embodiment, a method of manufacturing a dental handpiece includes providing an outer casing, providing a handpiece head, disposing a tool receiver in the handpiece head, the tool receiver being electrically conductive. The method further includes providing a drive chain that comprises a drive unit and a drive shaft drivable by the drive unit, the drive shaft being coupled to the tool receiver. The method includes disposing a slip ring around a section of the tool receiver such that the slip ring is in mechanical and electrical connection with the tool receiver, providing a prestressed bifurcated contact in mechanical and electrical connection with the slip ring, and impinging the prestressed bifurcated contact on the slip ring which impinges on the tool receiver to deliver electrical signals from a connection interface via a signal path to a tool inserted in the tool receiver during use of the dental handpiece. The signal path includes the prestressed bifurcated contact. The method further includes electrically isolating the drive chain, the tool receiver, and the signal path from the outer casing via ball bearings.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 depicts perspective view of a dental handpiece showing a vertical cross-section in accordance with an illustrative embodiment.
FIG. 2 depicts perspective view of a dental handpiece showing a transverse cross-section in accordance with an illustrative embodiment.
FIG. 3 depicts perspective view of a prestressed bifurcated contact in accordance with an illustrative embodiment.
FIG. 4 depicts perspective view of a motor of a dental handpiece in accordance with an illustrative embodiment.
FIG. 5 depicts a routine in accordance with one embodiment.
FIG. 6 depicts a computer system in accordance with an illustrative embodiment.

### DETAILED DESCRIPTION

### Overview

In the following detailed description, numerous specific details are set forth by way of examples to provide a thorough understanding of the relevant teachings. However, it should be apparent that the present teachings may be practiced without such details. In other instances, well-known methods, procedures, components, and/or circuitry have been described at a relatively high-level, without detail, to avoid unnecessarily obscuring aspects of the present teachings.

In one aspect, spatially related terminology such as "front," "back," "top," "bottom," "beneath," "below," "lower," above," "upper," "side," "left," "right," and the like, is used with reference to the orientation of the Figures being described. Since components of embodiments of the disclosure can be positioned in a number of different orientations, the directional terminology is used for purposes of illustration and is in no way limiting. Thus, it will be understood that the spatially relative terminology is intended to encompass different orientations of the device in use or operation in addition to the orientation depicted in the figures. For example, if the device in the figures is turned over, elements described as "below", or "beneath" other elements or features would then be oriented "above" the other elements or features. Thus, for example, the term "below" can encompass both an orientation that is above, as well as below. The device may be otherwise oriented (rotated 90 degrees or viewed or referenced at other orientations) and the spatially relative descriptors used herein should be interpreted accordingly.

As used herein, the term "vertical" describes an orientation that is arranged perpendicular to the large surface of a prestressed bifurcated contact and aligned with the length of the dental handpiece.

As used herein, the terms "transverse" describes an orientation parallel to the large surface of a prestressed bifurcated contact.

As used herein, the terms "coupled" and/or "electrically coupled" are not meant to mean that the elements must be directly coupled together-intervening elements may be provided between the "coupled" or "electrically coupled" elements. In contrast, if an element is referred to as being "directly connected" or "directly coupled" to another element, there are no intervening elements present. The term "electrically connected" refers to a low-ohmic electric connection between the elements electrically connected together such as two electrically conductive metals in direct physical contact with each other.

Although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It is to be understood that other embodiments may be used, and structural or logical changes may be made without departing from the spirit and scope defined by the claims. The description of the embodiments is not limiting. In particular, elements of the embodiments described hereinafter may be combined with elements of different embodiments.

The illustrative embodiments recognize that for endodontics treatment an electrical signal, which comes from a measurement device, through a motor, through a contra angle coupled to the motor, is provided to a file with which drilling and measuring of the root canal is performed. If the electrical signal has a shortcut through tissue, a wrong measurement, or no measurement may be obtained. Thus, the signal may have to be isolated from the patient's mouth, from the fingers holding the dental device, and so also from the rest of the dental device.

The concepts herein relate to a dental handpiece designed to enhance electrical signal transmission in endodontic treatment and provide reliable insulation of the handpiece housing from the electrical signals. The dental handpiece may include an electrically conductive tool receiver, a drive chain with a drive unit and shaft, and a slip ring in contact with the tool receiver. The device includes a prestressed bifurcated contact that ensures optimal signal transmission to the tool during use, while ball bearings (that include at least electrically non-conductive balls such as ceramic or plastic) electrically isolate the drive chain and electrical signals from a metallic outer casing. The slip ring and bifurcated contact may be gold-coated to enhance signal quality and reduce wear. Additionally, the device incorporates a flexible electrical coupling device and a spring-loaded contact for secure signal transmission between a contra-angle part of the handpiece and a motor. An insulation detection contact device and a internal or external processor such as a processor of a table top device are employed to verify the insulation integrity, ensuring safe and accurate measurements during dental procedures. In an embodiment, the use of a silicone cover or housing for the dental handpiece for insulation is thus obviated due to the isolation techniques of the drive and signal transmission described herein. Further, the contacting of the endodontic file and signal transmission to the file may be completely integrated in the dental handpiece as opposed to using external cables placed outside the head to contact the endodontic file from outside of the handpiece. By this integration, the use of external wires that can interfere with handling and visibility, and that can degrade hygiene is obviated.

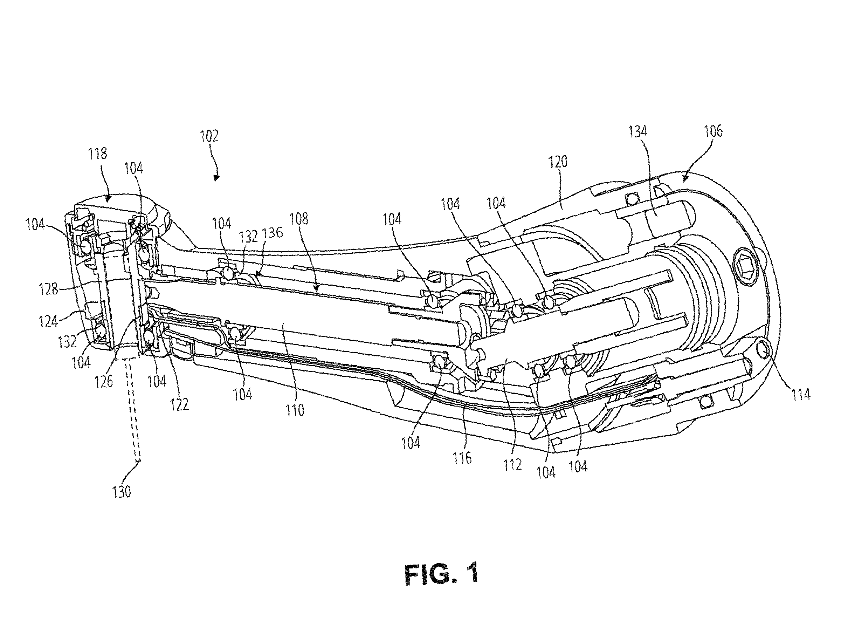

Turning now to FIG. 1, a vertical cross-section of a first portion (contra angle) of a dental handpiece 102 is shown. The dental handpiece 102 comprises at least an outer casing 120, a handpiece head 118, a tool receiver 128 disposed in the handpiece head 118, wherein the tool receiver 128 is electrically conductive. The dental handpiece 102 further includes a drive chain 108 comprising a drive unit 112 and a drive shaft 110 drivable by the drive unit 112. The drive shaft 110 is mechanically coupled to the tool receiver 128, which get signals from a signal path for a tool 130 in the tool receiver 128, and thus there is potential electrical transmission between the tool receiver 128 and the drive shaft 110. An electrical isolation of the drive chain 108 and signal path from the outer casing 120 (as well as, or which can generally include, as all electrically conductive materials that can be touched from the outside by a patient or practitioner) prevents the outer casing 120 from being electrified. The tool receiver 128 is also electrically isolated from the outer casing 120 (or otherwise a rest of the handpiece) at the handpiece head 118. In some implementations, a motor can be considered a part of the dental handpiece.

The electrical insulation of the outer casing from electrical signals may be provided by the ball bearings 136 distributed inside the dental handpiece 102 to hold the tool receiver 128 and drive chain 108 in place and prevent them from coming into contact with the rest of the dental handpiece 102. The balls 104 of the ball bearings 136 can be electrically non-conductive such as being made of ceramic or plastic. In some implementations, the case 132 of the ball bearings 136 are metallic but can alternatively be electrically non-conductive. The cage 132 holds the balls 104 in place. The cage 132 may in some cases not come into contact with the outer race of the ball bearings 136 especially if the cage 132 is made of metallic material. By separating the cage 132 the outer race with a predetermined distance designed to prevent crosstalk or electromagnetic interference between the cage 132 and the outer casing 120, the electrical insulation may be further ensured.

A slip ring 126 is disposed around a section 124 of the tool receiver 128 and in mechanical connection (e.g., press fitted) and electrical connection with the tool receiver 128. The section can be a circumferential depression that receives the slip ring 126. In the handpiece head 118, a prestressed bifurcated contact 122 is designed to be in mechanical and electrical connection with the slip ring 126. The prestressed bifurcated contact 122 impinges on the slip ring 126 which in turn impinges on the tool receiver 128 to provide a secure mechanical and electrical connection for delivering electrical signals from an internal electrical contact 114 at the connection interface 106 via a signal path (that includes the internal electrical contact 114 such as a flat pad, the flexible electrical coupling device 116, the prestressed bifurcated contact 122, the slip ring 126, and the tool receiver 128) to the tool 130 inserted in the tool receiver 128 during use of the dental handpiece 102. The drive chain 108 may also be electrified by virtue of being in contact with the tool receiver 128.

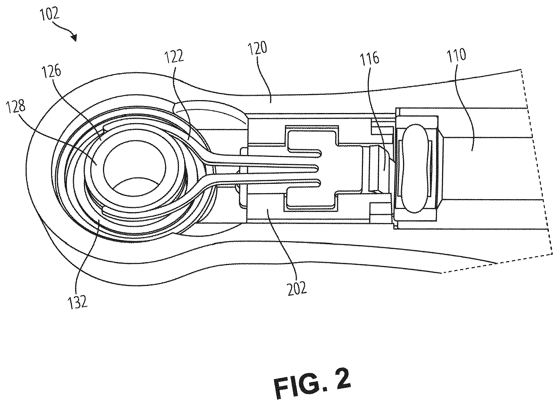

The impinging (*see* FIG. 2) includes a direct contact of the tool receiver 128 with the slip ring 126 in the handpiece head 118, producing a wear optimized contact spring design with optimal and uniform contact pressure aided by the further impinging of the prestressed bifurcated contact 122 (*see* FIG. 2). Both the slip ring 126 and the prestressed bifurcated contact may have a gold coating that aids in signal transmission and reduced wear. The bifurcated shape of the prestressed bifurcated contact 122 and the prestressing/spring loading of the prestressed bifurcated contact 122 can provide enough points of contact and contact security at opposite sides of the slip ring 126 to increase redundancy and provide consistent contact path for signal transmission during device use via the prestress. They may also provide just adequate inward pressure to alleviate wear. Excessive pressure may wear the gold away relative quickly. Inadequate pressure may produce vibrations and interrupted signals. Thus, the contact spring design herein by way of the prestress, bifurcation, contacting structure of the slip ring 126 disposed in the section 124 to the prestressed bifurcated contact 122 and to the tool receiver 128, and/or the plating of the slip ring 126 and the prestressed bifurcated contact 122 work together to provide consistent and isolated signal transmission through the signal path to the tool 130.

The signal path from the connection interface 106 to the tool 130 may include the prestressed bifurcated contact 122, and an electrical coupling device such as a flexible electrical coupling device 116 which may include, for example, a cable, a wire, a flexible printed circuit board, etc. Of course, other possibilities may be obtained in view of the descriptions herein. For example, a non-flexible coupling may electrically couple the prestressed bifurcated contact 122 to contact the internal electrical contact 114 at the connection interface 106.

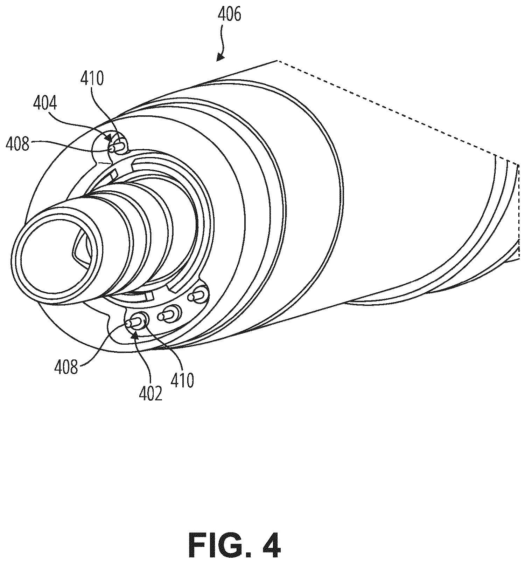

In an embodiment, the dental handpiece 102 includes an internal electrical contact 114 (such as a flat pad or a concave pad or any other pad or other electrical contact) at the connection interface 106 electrically coupled to the flexible electrical coupling device 116. An external electrical contact 402 (*see* FIG. 4) which may be spring loaded and disposed on a motor 406 may be brought into electrical connection with the internal electrical contact 114 when the motor 406 is coupled to the contra angle of the dental handpiece at the connection interface 106.

FIG. 2 shows a cross-section of the dental handpiece 102 passing through a plane parallel to the large surface of the prestressed bifurcated contact 122. As shown in the figure, the flexible electrical coupling device 116 is directly or indirectly coupled to the prestressed bifurcated contact 122.A coupling device 202 may facilitate the coupling. In one example, the coupling device 202 holds electrical assembly of the prestressed bifurcated contact 122 and the flexible electrical coupling device 116 in place. In some implementations, the flexible electrical coupling device 116 is soldered onto the prestressed bifurcated contact 122.

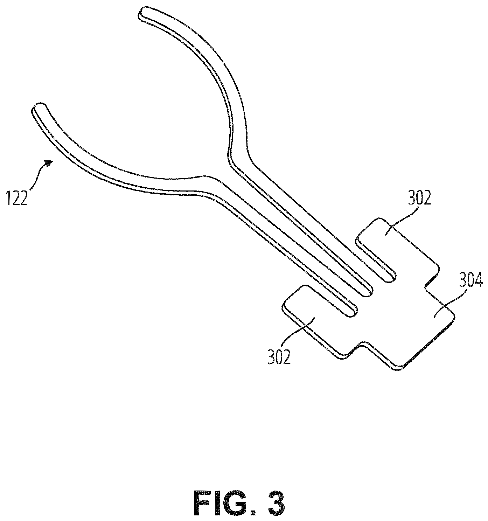

FIG. 3 illustrates a perspective view of the prestressed bifurcated contact 122 showing arms 302. As discussed, the prestressed bifurcated contact 122 can be coated with gold to facilitate signal transmission and reduce wear at the contact surfaces between the slip ring 126 and the prestressed bifurcated contact 122. The flexible electrical coupling device 116 can be connected to the prestressed bifurcated contact 122 at any point of the prestressed bifurcated contact 122. In some implementations, the shape of the arms 302 is similar to the shape of the flexible electrical coupling device 116 at the interface where they are soldered together such that the arms 302 and the base 304 provide enough surface area for molten solder material to flow at the interface such that the prestressed bifurcated contact 122 gets properly aligned with the slip ring 126 to impart similar amount of forcers on both sides of the slip ring 126. More specifically, during reflow soldering, the molten solder tends to minimize its internal energy towards mechanical equilibrium which causes the prestressed bifurcated contact 122 to move to the state of minimal energy and provides self-alignment.

Turning to FIG. 4, the motor 406 is illustrated. The motor 406 includes one or more external electrical contacts 402 and an insulation detection contact device 404. The insulation detection contact device 404 can be one of the external electrical contacts 402.

The external electrical contacts 402 and the insulation detection contact device 404 may comprise a pin 408 that is spring-loaded or depressible when coupled to the first portion of the dental handpiece 102 shown in FIG. 1. Spring loading the external electrical contacts 402 provides a secure and repeatable/reliable physical and electrical connection between an external electrical contact 402 and a corresponding internal electrical contact114 for transmission of electrical signals for endodontic measurements or root canal measurements.

The insulation detection contact device 404 is used to verify an electrical isolation of the drive chain 108 and the signal path from the rest of the dental handpiece 102. More specifically, upon coupling the motor 406 to the contra-angle at the connection interface 106, the insulation detection contact device 404 (which may be any device that can conduct electricity in an electrical path) or a pin 408 of the insulation detection contact device 404 comes into physical contact with the outer casing extension 134. The insulation detection contact device 404 may be coupled to an external device for measuring the impedance. If the touchable surface of the handpiece 102 is not insulated (for example if there is a short circuit between the outer casing 120 and the signal path or drive chain 108), an electrical circuit of the signal path, drive chain 108 and the outer casing extension 134 is closed and the impedance between the outer casing extension 134 and the internal electrical contact 114 drops to below a threshold value that may be predetermined. More specifically, in some implementations, a processor of a system that includes the dental handpiece 102 may be configured to transmit an electrical signal through the signal path when the motor 406 is coupled at the connection interface, and to measure the resulting change in impedance between the internal electrical contact 114 and the outer casing extension 134 (insulated path). The processor can then compute an electric insulation decision based on the measured impedance.

Further, spring loading the insulation detection contact device 404 provides a repeatable and reliable physical and electrical connection between the insulation detection contact device 404 and the outer casing extension 134 for determining whether the outer casing is insulated.

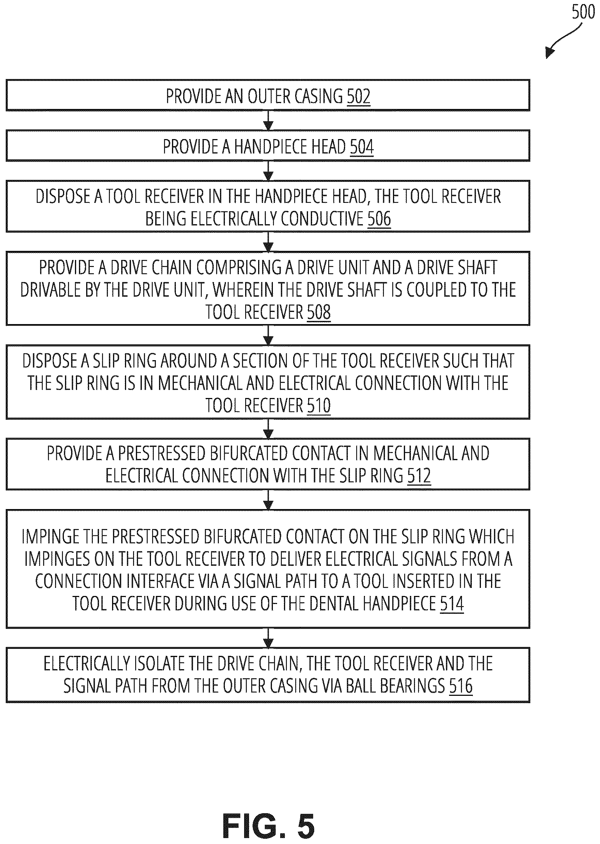

FIG. 5 illustrates a manufacturing or assembly routine 500 in accordance with an illustrative embodiment. The routine may be performed, for example, by or with the help of a processor or group of processors in a manufacturing plant. In block 502, the routine 500 provides an outer casing 120. In block 504, the routine 500 provides a handpiece head 118. In block 506, the routine 500 disposes a tool receiver 128 in the handpiece head 118, the tool receiver 128 being electrically conductive. In block 508, the routine 500 provides a drive chain 108 comprising a drive unit 112 and a drive shaft 110 drivable by the drive unit 112, wherein the drive shaft 110 is coupled to the tool receiver 128. In block 510, the routine 500 disposes a slip ring 126 around a section 124 of the tool receiver 128 such that the slip ring 126 is in mechanical and electrical connection with the tool receiver 128. In block 512, the routine 500 provides a prestressed bifurcated contact 122 in mechanical and electrical connection with the slip ring 126. In block 514, the routine 500 impinges the prestressed bifurcated contact 122 on the slip ring 126 which impinges on the tool receiver 128 to deliver electrical signals from a connection interface 106 via a signal path to a tool 130 inserted in the tool receiver 128 during use of the dental handpiece 102. The signal path can include the prestressed bifurcated contact 122. In block 516, the routine 500 electrically isolates the drive chain 108, the tool receiver 128 and the signal path from the outer casing 120 via electrically non-conductive ball bearings such as ball bearings 136 with electrically non-conductive balls 104.

Upon use of the manufactured dental handpiece, an insulation detection contact device 404 which is disposed on a motor that is connected at the connection interface, can be utilized for measuring the insulation. More specifically, a processor configured to transmit an electrical signal through the signal path, and to measure an impedance between the internal electrical contact 114 and the outer casing extension 134to compute an insulation metric of the handpiece.

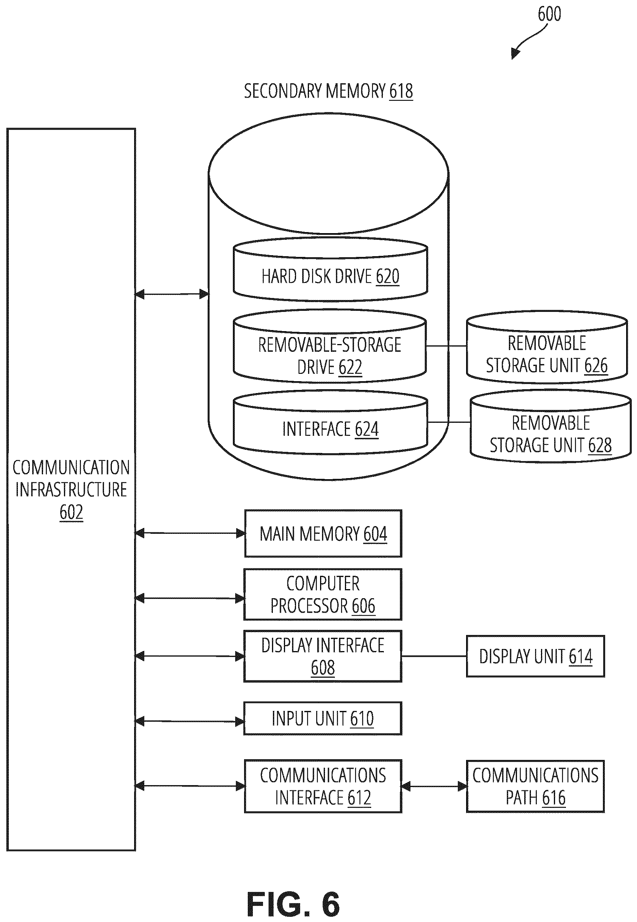

Having described the dental handpiece 102, reference will now be made to FIG. 6, which shows a block diagram of a computer system 600 that may be employed in accordance with at least some of the illustrative embodiments herein. Although various embodiments may be described herein in terms of this exemplary computer system 600, after reading this description, it may become apparent to a person skilled in the relevant art(s) how to implement the disclosure using other computer systems and/or architectures.

In one example embodiment herein, at least some components of an endodontic system or equipment that includes the dental handpiece 102 and a table top device, may form or be included in the computer system 600 of FIG. 6. For example, the computer processor 606 may form a part of or be the processor used for insulation measurement, or for control of the motor. The computer system 600 includes at least one computer processor 606. The computer processor 606 may include, for example, a central processing unit (CPU), a multiple processing unit, an application-specific integrated circuit ("ASIC"), a field programmable gate array ("FPGA"), or the like. The computer processor 606 may be connected to a communication infrastructure 602 (e.g., a communications bus, a cross-over bar device, a network). In an illustrative embodiment herein, the computer processor 606 includes a CPU that that controls the root canal measurement process, including operating the electrical signal transmission, operating the drive chain 108, and operating the insulation measurement.

The display interface 608 (or other output interface) may forward text, video graphics, and other data from the communication infrastructure 602 (or from a frame buffer (not shown)) for display on display unit 614. For example, the display interface 608 may include a video card with a graphics processing unit or may provide an operator with an interface for controlling the system.

The computer system 600 may also include an input unit 610 that may be used, along with the display unit 614 by an operator of the computer system 600 to send information to the computer processor 606. The input unit 610 may include a keyboard and/or touchscreen monitor. In one example, the display unit 614, the input unit 610, and the computer processor 606 may collectively form a user interface.

One or more steps of root canal measurement, or dental handpiece manufacturing/assembly may be stored on a non-transitory storage device in the form of computer-readable program instructions. To execute a procedure, the computer processor 606 loads the appropriate instructions, as stored on storage device, into memory and then executes the loaded instructions.

The computer system 600 may further comprise a main memory 604, which may be a random-access memory ("RAM"), and also may include a secondary memory 618. The secondary memory 618 may include, for example, a hard disk drive 620 and/or a removable storage drive 622 (e.g., a floppy disk drive, a magnetic tape drive, an optical disk drive, a flash memory drive, and the like). The removable storage drive 622 reads from and/or writes to a removable storage unit 626 in a well-known manner. The removable storage unit 626 may be, for example, a floppy disk, a magnetic tape, an optical disk, a flash memory device, and the like, which may be written to and read from by the removable storage drive 622. The removable storage unit 626 may include a non-transitory computer-readable storage medium storing computer-executable software instructions and/or data.

In further illustrative embodiments, the secondary memory 618 may include other computer-readable media storing computer-executable programs or other instructions to be loaded into the computer system 600. Such devices may include removable storage unit 628 and an interface 624 (e.g., a program cartridge and a cartridge interface); a removable memory chip (e.g., an erasable programmable read-only memory ("EPROM") or a programmable read-only memory ("PROM")) and an associated memory socket; and other removable storage units 628 and interfaces 624 that allow software and data to be transferred from the removable storage unit 628 to other parts of the computer system 600.

The computer system 600 may also include a communications interface 612 that enables software and data to be transferred between the computer system 600 and external devices. Such an interface may include a modem, a network interface (e.g., an Ethernet card or an IEEE 802.11 wireless LAN interface), a communications port (e.g., a Universal Serial Bus ("USB") port or a FireWire^{®} port), a Personal Computer Memory Card International Association ("PCMCIA") interface, Bluetooth^{®}, and the like. Software and data transferred via the communications interface 612 may be in the form of signals, which may be electronic, electromagnetic, optical or another type of signal that may be capable of being transmitted and/or received by the communications interface 612. Signals may be provided to the communications interface 612 via a communications path 616 (e.g., a channel). The communications path 616 carries signals and may be implemented using wire or cable, fiber optics, a telephone line, a cellular link, a radiofrequency ("RF") link, or the like. The communications interface 612 may be used to transfer software or data or other information between the computer system 600 and a remote server or cloud-based storage (not shown).

One or more computer programs or computer control logic may be stored in the main memory 604 and/or the secondary memory 618. The computer programs may also be received via the communications interface 612. The computer programs include computer-executable instructions which, when executed by the computer processor 606, cause the computer system 600 to perform the methods as described hereinafter. Accordingly, the computer programs may control the computer system 600 and other components of the endodontic system.

In another embodiment, the software may be stored in a non-transitory computer-readable storage medium and loaded into the main memory 604 and/or the secondary memory 618 using the removable-storage drive 622, hard disk drive 620, and/or the communications interface 612. Control logic (software), when executed by the computer processor 606, causes the computer system 600, and more generally the endodontic, to perform some or all of the methods described herein.

Although techniques using, and apparatuses including endodontic contra angles and motors of endodontic dental handpieces have been described in language specific to features and/or methods, it is to be understood that the subject of the appended claims is not necessarily limited to the specific features or methods described. Rather, the specific features and methods are disclosed as example implementations.

Some examples are provided below:
Example 1: A dental handpiece comprising: an outer casing; a handpiece head;
   a tool receiver disposed in the handpiece head, the tool receiver being electrically conductive; a drive chain comprising a drive unit and a drive shaft drivable by the drive unit, the drive shaft being coupled to the tool receiver; a slip ring disposed around a section of the tool receiver and in mechanical and electrical connection with the tool receiver; a prestressed bifurcated contact in mechanical and electrical connection with the slip ring; wherein a the prestressed bifurcated contact impinges on the slip ring which impinges on the tool receiver to deliver electrical signals from a connection interface via a signal path to a tool inserted in the tool receiver during use of the dental handpiece, the signal path including the prestressed bifurcated contact, and wherein the drive chain, the tool receiver, and the signal path are electrically isolated from the outer casing via ball bearings.
Example 2: The dental handpiece of Example 1, wherein the signal path further includes a flexible electrical coupling device, and the prestressed bifurcated contact is coupled through the flexible electrical coupling device to an external electrical contact at the connection interface.
Example 3: The dental handpiece of Example 1 or any other example, further comprising an internal electrical contact at the connection interface electrically coupled to the flexible electrical coupling device, and a spring-loaded contact at the connection interface disposed on a motor opposite the internal electrical contact and in electrical connection with the internal electrical contact when the motor is connected to the drive unit.
Example 4: The dental handpiece of Example 1 or any other example, in which the balls of the ball bearings are electrically non-conductive.
Example 5: The dental handpiece of Example 1 or any other example, wherein the slip ring is press-fitted to the tool receiver.
Example 6: The dental handpiece of Example 1 or any other example, wherein the section is a circumferential depression.
Example 7: The dental handpiece of Example 1 or any other example, wherein the prestressed bifurcated contact and the slip ring are coated with gold.
Example 8: The dental handpiece of Example 1 or any other example, further comprises an insulation detection contact device disposed on a motor for connection to the outer casing at the connection interface. A system of the handpiece further comprises a processor configured to transmit an electrical signal through the signal path and measure an impedance between the internal electrical contact and the outer casing extension to compute an insulation metric of the handpiece.
Example 9: The dental handpiece of Example 1 or any other example, where the outer casing is metallic.
Example 10: A method of manufacturing a dental handpiece comprising: providing an outer casing; providing a handpiece head; disposing a tool receiver in the handpiece head, the tool receiver being electrically conductive; providing a drive chain comprising a drive unit and a drive shaft drivable by the drive unit, wherein the drive shaft is coupled to the tool receiver; disposing a slip ring around a section of the tool receiver such that the slip ring is in mechanical and electrical connection with the tool receiver; providing a prestressed bifurcated contact in mechanical and electrical connection with the slip ring; impinging the prestressed bifurcated contact on the slip ring which impinges on the tool receiver to deliver electrical signals from a connection interface via a signal path to a tool inserted in the tool receiver during use of the dental handpiece, the signal path including the prestressed bifurcated contact, and electrically isolating the drive chain, the tool receiver and the signal path from the outer casing via ball bearings which are electrically non-conductive at least by virtue of having electrically non conductive balls..
Example 11: The method of Example 10 or any other example further comprises coating the prestressed bifurcated contact and the slip ring with gold.
Example 12: The method of Example 10 or any other example, further comprising disposing an insulation detection contact device on a motor for connection to the outer casing at the connection interface. The handpiece further comprises a processor configured to transmit an electrical signal through the signal path and measure the potential of the outer casing through the insulation detection contact device to compute an insulation metric of the handpiece.

### Conclusion

The descriptions of the various embodiments of the present teachings have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

While the foregoing has described what are considered to be the best state and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

The components, steps, features, objects, benefits, and advantages that have been discussed herein are merely illustrative. None of them, nor the discussions relating to them, are intended to limit the scope of protection. While various advantages have been discussed herein, it will be understood that not all embodiments necessarily include all advantages. Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

Numerous other embodiments are also contemplated. These include embodiments that have fewer, additional, and/or different components, steps, features, objects, benefits, and advantages. These also include embodiments in which the components and/or steps are arranged and/or ordered differently.

While the foregoing has been described in conjunction with exemplary embodiments, it is understood that the term "exemplary" is merely meant as an example, rather than the best or optimal. Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a" or "an" does not, without further constraints, preclude the existence of additional identical elements in the process, method, article, or apparatus that comprises the element.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments have more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

## Claims

1. A dental handpiece comprising:
an outer casing;
a handpiece head;
a tool receiver disposed in the handpiece head, the tool receiver being electrically conductive;
a drive chain comprising a drive unit and a drive shaft drivable by the drive unit, the drive shaft being coupled to the tool receiver;
a slip ring disposed around a section of the tool receiver and in mechanical and electrical connection with the tool receiver;
a prestressed bifurcated contact in mechanical and electrical connection with the slip ring;
wherein the prestressed bifurcated contact impinges on the slip ring which impinges on the tool receiver to deliver electrical signals from a connection interface via a signal path to a tool inserted in the tool receiver during use of the dental hand piece, the signal path including the prestressed bifurcated contact, and
wherein the drive chain and the signal path are electrically isolated from the outer casing via ball bearings.

2. The dental handpiece of claim 1, wherein:
the signal path further includes a flexible electrical coupling device, and
the prestressed bifurcated contact is further coupled through the flexible electrical coupling device to an internal electrical contact at the connection interface.

3. The dental hand piece of claim 2, wherein:
the signal path further includes the slip ring, the tool receiver, and the internal electrical contact.

4. The dental handpiece of claim 2 or 3, further comprising:
an internal electrical contact at the connection interface electrically coupled to the flexible electrical coupling device;
wherein the external electrical contact is spring loaded and disposed on a motor opposite the internal electrical contact and in electrical connection with the internal electrical contact when the motor is connected to the drive unit.

5. The dental hand piece of any one of claims 1 to 4, where a plurality of balls of the ball bearings are electrically non-conductive.

6. The dental handpiece of any one of claims 1 to 5, wherein the slip ring is press fitted to the tool receiver.

7. The dental handpiece of any one of claims 1 to 6, wherein the section is circumferential depression.

8. The dental handpiece of any one of claims 1 to 7, wherein the prestressed bifurcated contact and the slip ring are coated with gold.

9. The dental handpiece of any one of claims 1 to 8, further comprising:
an insulation detection contact device disposed on a motor for connection to the outer casing at the connection interface,
wherein a processor is configured to:
transmit an electrical signal through the signal path when the motor is coupled at the connection interface, and
measure an impedance between the internal electrical contact and the outer casing extension to compute an insulation metric of the dental handpiece.

10. The dental handpiece of any one of claims 1 to 9, wherein the outer casing is metallic.

11. The dental handpiece of any one of claims 1 to 10, wherein the flexible electrical coupling device further comprises a plurality of arms configured for self-alignment during a soldering process.

12. A method of manufacturing a dental handpiece comprising:
providing an outer casing;
providing a handpiece head;
disposing a tool receiver in the handpiece head, the tool receiver being electrically conductive;
providing a drive chain comprising a drive unit and a drive shaft drivable by the drive unit, wherein the drive shaft is coupled to the tool receiver;
disposing a slip ring around a section of the tool receiver such that the slip ring is in mechanical and electrical connection with the tool receiver;
providing a prestressed bifurcated contact in mechanical and electrical connection with the slip ring;
impinging the prestressed bifurcated contact on the slip ring which impinges on the tool receiver to deliver electrical signals from a connection interface via a signal path to a tool inserted in the tool receiver during use of the dental hand piece, the signal path including the prestressed bifurcated contact, and
electrically isolating the drive chain, the tool receiver, and the signal path from the outer casing via ball bearings.

13. The method of claim 12, further comprising:
coating the prestressed bifurcated contact and the slip ring with gold.

14. The method of claim 12 or 13, further comprising:
disposing an insulation detection contact device on a motor for connection to the outer casing at the connection interface,
wherein a processor is configured to:
transmit an electrical signal through the signal path, and
measure an impedance between the internal electrical contact and the outer casing extension to compute an insulation metric of the hand piece.

15. The method of any one of claims 12 to 14, further comprising:
providing a plurality of arms to the prestressed bifurcated contact that enable self-alignment of the prestressed bifurcated arms upon soldering the prestressed bifurcated contact to a flexible coupling device of the dental handpiece.
